# EUROPEAN PATENT APPLICATION

(11) **EP 3 045 225 A2**
(43) Date of publication of application: **20.07.2016**
(21) Application number: 15183524.6
(22) Date of filing: 02.09.2015
(51) Int. Cl.: B01J 20/28, B01J 20/32, B01J 20/22, F24F 3/14, B01D 53/28, B01D 53/26, F25B 17/00, G01N 27/02

(54) **WATER VAPOR ADSORPTION-DESORPTION MATERIAL AND METHOD FOR MEASURING LCST BEHAVIOR**

(30) Priority: 02.09.2014 JP 2014178542
(71) Applicant: TOYOTA JIDOSHA KABUSHIKI KAISHA, Toyota-shi, Aichi 471-8571 (JP); Japan Advanced Institute of Science and Technology, Ishikawa 923-1292 (JP)
(72) Inventor: WATANABE, Masaki, Toyota-shi, Aichi-ken, 471-8571 (JP); ISHIKIRIYAMA, Mamoru, Toyota-shi, Aichi-ken, 471-8571 (JP); MATSUMI, Noriyoshi, Nomi-shi, Ishikawa-ken, 923-1292 (JP); RAMAN, Vedarajan, Nomi-shi, Ishikawa-ken, 923-1292 (JP); GUPTA, Surabhi, Nomi-shi, Ishikawa-ken, 923-1292 (JP); KAMIYA, Jain, Nomi-shi, Ishikawa-ken, 923-1292 (JP)
(74) Representative: Intès, Didier Gérard André

(57) **Abstract**

Provided is a water vapor adsorption-desorption material in which a substance having a LCST is uniformly retained inside pores of a mesoporous body, which can reduce energy required for regeneration, and a method for measuring LCST behavior capable of measuring LCST behavior of an ionic liquid used in the water vapor adsorption-desorption material without errors. The water vapor adsorption-desorption material includes a mesoporous body and an ionic liquid retained inside pores of the mesoporous body, the ionic liquid exhibiting LCST behavior, and the method for measuring LCST behavior of an ionic liquid used for a water vapor adsorption-desorption material, the method including detecting a change of hydration/dehydration state of a mixture of the ionic liquid and water as electric signals, by means of AC impedance measurement.

## Description

### TECHNICAL FIELD

The present invention relates to a water vapor adsorption-desorption material and a method for measuring LCST behavior of an ionic liquid used for the water vapor adsorption-desorption material.

### BACKGROUND ART

A water vapor adsorption-desorption material, which has a characteristic of absorbing and releasing water vapor in the air, has been conventionally used in desiccant type dehumidifiers and air conditioners. The water vapor adsorption-desorption material has a characteristic of absorbing and releasing water vapor according to difference in temperature or relative moisture. Therefore, even if the water vapor adsorption-desorption material degrades its hygroscopicity by absorbing water vapor, it can recover the hygroscopicity by releasing water vapor under predetermined conditions. Therefore, the water vapor adsorption-desorption material is repeatedly used as a recyclable hygroscopic material.

As an example of such a water vapor adsorption-desorption material, JPH11-114410 A discloses a steam adsorption-desorption material formed by a mesoporous body having pores each having a diameter within a range of 1 to 10 nm, in which a pressure reducing agent which decreases vapor pressure of liquid is attached inside the pores, wherein the mesoporous body shows an X-ray diffraction pattern having at least one peak at a diffraction angle corresponding to 1 nm or more of d value. ICHIHASHI Toshio and NAKANO Yoshio, Characteristics of Water Vapor Adsorption and Desorption in Thermo-Sensitive Mesoporous Silica Gel/Polymer Gel, KAGAKU KOGAKU RONBUNSHU, Vol. 34, pp. 471-476, 2008 discloses a mesoporous silica gel/polymer gel (composite silica gel) in which a polymer having a temperature sensitive property (temperature sensitive polymer) is introduced into and composited with a mesoporous silica gel, to give temperature dependency to hygroscopicity. The temperature sensitive polymer has a Lower Critical Solution temperature (LCST) in water. Hydrophobic bond in the polymer or between the polymers gets strong at a temperature higher than the LCST, to aggregate the polymer chain(s). Conversely, the polymer chain(s) bond(s) water molecules at a temperature lower than the LCST, to be hydrated.

### SUMMARY OF INVENTION

### Technical Problem

According to the steam adsorption-desorption material disclosed in JPH11-114410 A, hygroscopicity can be increased. However, since the effect of the hygroscopicity does not change depending on temperature, moisture once absorbed is difficult to be released and heating at a high temperature and the like are required for recovery (regeneration) of the hygroscopicity. Thus, there is a problem that energy required for the regeneration increases. On the other hand, according to the composite silica gel disclosed in ICHIHASHI Toshio and NAKANO Yoshio, Characteristics of Water Vapor Adsorption and Desorption in Thermo-Sensitive Mesoporous Silica Gel/Polymer Gel, KAGAKU KOGAKU RONBUNSHU, Vol. 34, pp. 471-476, 2008, the adsorption amount of water vapor increases at a temperature lower than the LCST of the temperature sensitive polymer, and decreases at a temperature higher than the LCST. Therefore it is possible to decrease the regeneration temperature and to reduce energy required for the regeneration. However, since the temperature sensitive polymer is generally bulky due to its molecular weight of several tens of thousands, it is difficult to uniformly retain the temperature sensitive polymer into pores of the mesoporous silica gel whose pore diameters are several nanometers or less.

The inventors of the present invention have thought that it is possible to enlarge the difference in hygroscopic characteristic according to temperature to make the regeneration temperature lower, by making the mesoporous body retain a substance exhibiting LCST behavior more uniformly inside pores. Recently, some ionic liquid are known to have a LCST, similarly to temperature sensitive polymers. However, in a case where an ionic liquid is applied to a mesoporous body, it was unknown whether or not the LCST of the ionic liquid changes the hygroscopicity of the mesoporous body according to temperature, similarly to temperature sensitive polymers, since ionic liquids do not get composited with a mesoporous body as temperature sensitive polymers do. In addition, methods for correctly measuring LCSTs of ionic liquids have not been sufficiently established.

Conventionally, the LCST of an ionic liquid is measured by measuring changes in light transmittance with respect to temperatures of a mixture of the ionic liquid and water to identify the temperature at which a phase separation (state change from hydration to dehydration or from dehydration to hydration) occurs in the mixture. However, the phenomenon of the phase separation (hydration/dehydration) occurring at the molecular level requires time to be "observable" as a macroscopic phenomenon of difference in light transmittance, thereby creates a time lag (for example in a case of dehydration, a time lag between the resolution of bond of the solute with water molecule and aggregation of the solute molecules to form molecular groups, to change the light transmittance). The time lag causes errors when the measurement is carried out with the temperatures continuously changed.

Accordingly, an object of the present invention is to provide a water vapor adsorption-desorption material in which a substance which exhibits LCST behavior is uniformly retained inside pores of a mesoporous body, with which energy required for regeneration can be reduced, and a method for measuring LCST behavior of an ionic liquid used for the water vapor adsorption-desorption material without errors.

### Solution to Problem

As a result of intensive studies, the inventors of the present invention have found the followings: with an ionic liquid having a LCST and retained inside pores of a mesoporous body, it is possible to widely change hygroscopicity around the LCST, due to LCST behavior of the ionic liquid; it is also possible to measure LCST behavior of the ionic liquid without errors, by detecting change of hydration/dehydration state of a mixture of the ionic liquid and water, as electrical signals by means of AC impedance measurement. The present invention has been made based on the above findings.

In order to solve the above problems, the present invention takes the following means, that is, a first aspect of the present invention is a water vapor adsorption-desorption material including a mesoporous body and an ionic liquid retained inside pores of the mesoporous body, the ionic liquid exhibiting LCST behavior.

In the present invention, the term "(ionic liquid) exhibits LCST behavior" means the ionic liquid has a lower critical solution temperature (LCST) in water, and exhibits behavior of being compatible with water (hydration) at a temperature lower than the LCST and behavior of phase separation with water (dehydration) at a temperature higher than the LCST.

In the present invention, the term "ionic liquid retained inside pores" means that the ionic liquid is introduced into pores of the mesoporous body and fixated (carried) on the surfaces of the pores, by electric charges of the ionic liquid and mesoporous body.

In the present invention, the "mesoporous body" represents a porous body having meso pores each having a pore diameter of no less than 2 nm and no more than 50 nm.

In the first aspect of the present invention, the ionic liquid may be 1-hexyl-3-methylimidazolium bromide.

A second aspect of the present invention is a method for measuring LCST behavior of an ionic liquid used for a water vapor adsorption-desorption material, the method including detecting a change of hydration/dehydration state of a mixture of the ionic liquid and water as electric signals, by means of AC impedance measurement.

In the second aspect of the present invention, it is preferable that the AC impedance measurement is carried out at a constant current mode, at least in a range from 1 Hz to 1 MHz in every 3°C to 10°C, at least in a temperature range from -5°C to 100°C and in a case where a phase change which is not monotonic is found with respect to temperature change at a specific frequency, LCST is measured by measuring impedance or phase while the temperature of the mixture is finely changed at the specific frequency.

In the present invention, the term "a case where a phase change which is not monotonic is found with respect to temperature" means a case where the rate of change in the phase per unit temperature, or signs (plus and minus) of the rate of change changes, for example a case where the monotonously increasing inclination of the phase has changed and a case where the phase has turned from a monotonic increase to a monotonic decrease with respect to temperature change.

### Advantageous Effect of Invention

According to the water vapor adsorption-desorption material of the present invention, it is possible to provide a water vapor adsorption-desorption material in which a substance which exhibits LCST behavior is uniformly retained inside pores of a mesoporous body, the material being able to reduce energy required for regeneration, and a method for measuring LCST behavior with which LCST behavior of the ionic liquid used for the water vapor adsorption-desorption material can be measured without errors.

### BRIEF DESCRIPTION OF DRAWINGS

Fig. 1 is a graph showing measurement results of Example 1 at a constant current mode;
Fig. 2 is a graph showing measurement results of Comparative Example 1 at a constant current mode;
Fig. 3 is a graph showing temperature dependency of phase angles of Example 1 and Comparative Example 1 at 1 MHz of frequency;
Fig. 4A is a graph showing measurement results of water vapor adsorption isotherms of Example 2; and
Fig. 4B is a graph showing measurement results of water vapor adsorption isotherms of Comparative Example 2.

### DESCRIPTION OF EMBODIMENTS

Hereinafter the present invention will be described. It should be noted that the embodiments shown below are examples of the present invention, and the present invention is not limited to the embodiments.

### 1. Water vapor adsorption-desorption material

The first aspect of the present invention is a water vapor adsorption-desorption material including a mesoporous body and an ionic liquid retained inside pores of the mesoporous body, the ionic liquid exhibiting LCST behavior.

### 1.1. Ionic liquid exhibiting LCST behavior

Ionic liquid is a collective term for salts existing in a liquid form, specifically, salts which become liquid near normal temperature. Ionic liquid is also called an ion liquid or low melting point molten salt. An ionic liquid is a liquid consisting of only ions (anion, cation). Therefore, ionic liquids are easy to be introduced into pores of a mesoporous body, and can easily be uniformly retained inside pores of the mesoporous body, which is difficult to be done with temperature sensitive polymers. Further, since ionic liquids are nonvolatile (or having nearly no steam pressure), they have an incombustible or flame-retardant property, and have characteristics such as a high heat resistance, of being liquid at a wide range of temperature and of being chemically stable. Therefore, the ionic liquid is difficult to be lost from pores of the mesoporous body, even if the water vapor adsorption-desorption material is heated to a high temperature.

The ionic liquid used in the present invention exhibits LCST behavior. That is, the ionic liquid has a lower critical solution temperature (LCST) in water, and exhibits behavior of being compatible with water (hydration) at a temperature lower than the LCST, and behavior of phase separation with water (dehydration) at a temperature higher than the LCST.

As a result of experiments, the inventors of the present invention have confirmed the followings; the mesoporous body in which an ionic liquid exhibiting LCST behavior is retained inside pores increases hydrophilicity inside the pores to increase hygroscopic characteristic at a temperature lower than the LCST, and increases hydrophobicity inside the pores to decrease hygroscopic characteristic at a temperature higher than the LCST, according to LCST behavior of the ionic liquid. In the present invention which employs an ionic liquid as a substance which exhibits LCST behavior, it is possible to more uniformly retain the substance which exhibits LCST behavior inside pores of the mesoporous body than before, to make hydrophilicity/hydrophobicity inside the pores uniform and increase each characteristic. Therefore, it is considered that the hygrosopic characteristic of the mesoporous body can be rapidly changed at temperatures lower and higher than the LCST, compared to the conventional techniques, whereby it is possible to decrease the regeneration temperature more than before.

Examples of the ionic liquid exhibiting LCST behavior which can be used in the present invention include 1-hexyl-3-methylimidazolium bromide, tributyl-n-octylphosphonium bromide, tetrabutylphosphonium p-toluenesulfonate, tetrabutylphosphonium 2,4-dimethylbenzenesulfonate, tetrabutylphosphoniumtrifluoroacetate, tetrabuthylphosphonium 2,4,6-trimethylbenzenesulfonate and tetrabuthylammonium 2,4,6-trimethylbenzenesulfonate.

### 1.2. Mesoporous body

The mesoporous body is a porous body having pores (meso pores) each having a pore diameter of 2 to 50 nm. The mesoporous body which can be employed in the present invention is not particularly limited as long as it has such pores (meso pores), and the mesoporous body described in Patent Document 1 can be used.

In a case where a temperature sensitive polymer is introduced and composited to a mesoporous silica gel, the hygroscopic characteristic does not change at temperatures higher and lower than the LCST, depending on the pore radius of the mesoporous body. In contrast, the present invention can employ mesoporous body having wide ranges of pore diameter.

The method for retaining the ionic liquid inside the pores of the mesoporous body is not particularly limited. For example, a method of immersing the mesoporous body with a mixture of the ionic liquid and water thereafter drying them, a method of immersing the mesoporous body directly with the ionic liquid thereafter immersing with water at a temperature higher than the LCST to separate and remove the excessive ionic liquid, and the like can be given.

The ionic liquid can be retained on a surface area other than the pores of the mesoporous body.

### 2. Method for measuring LCST behavior

The second aspect of the present invention is a method for measuring LCST behavior of an ionic liquid used for a water vapor adsorption-desorption material, the method including detecting a change of hydration/dehydration state of a mixture of the ionic liquid and water as electric signals, by means of AC impedance measurement.

In the present invention, the measurement of AC impedance is carried out by:
in a container filled with a mixture of the ionic liquid and water, providing two platinum plate electrodes facing each other;
connecting each electrode to an impedance measurement apparatus;
then, the measurement is carrying out as the following steps (1) to (3).
   (1) at a constant current (galvanostat) mode and at least in a range of -5°C to 100°C, carrying out AC impedance measurement at every 3 to 10°C at least in a range of 1 Hz to 1 MHz.
   (2) in a case where a phase change which is not monotonic is found with respect to temperature change at a specific frequency, where it can be considered that a state change is occurring, carrying out the following way for measurement in more detail.
   (3) at the specific frequency of (2), measuring impedances or phases while the temperature of the mixture is changed more finely than (1), to measure in more detail the temperature at which the state change occurs (LCST).

In the above (1), the current value in measuring at a constant current mode is not particularly limited as long as the phase change can be detected. In view of inhibiting degradation of the electrodes, it is preferable to apply a constant current of 0 mA to 500 mA.

By carrying out AC impedance measurement at the constant current, in a range of 1 Hz to 1 MHz in every 3 to 10°C at least in a range of -5°C to 100°C, it is possible to prevent oversight of the phase change which is not monotonic in the above (2), even if the method for measuring LCST behavior of the present invention is employed for measuring various ionic liquids.

In the measurement of (1), the temperature needs to be constant, since one measurement at a specific frequency takes several minutes to several tens of minutes. On the other hand, it is possible to carry out the measurement of (3) while the temperature is continuously changed, since the measurement at a specific temperature finishes in several seconds.

In the conventional measurement of LCST behavior by means of difference in light transmittance, there is a time lag between the start of appearance of the solute molecules and aggregations of the solute molecules to change the light transmittance. Thus, there occur measurement errors in the LCST. However, with the AC impedance measurement, it is possible to obtain a correct LCST since no time lag occurs because of seeing electronic signals.

### Examples

1. Measurement of LCST behavior

### 1.1. Example 1

A measurement of LCST behavior of an aqueous solution of 1-hexyl-3-methylimidazolium bromide (1.2 M) was carried out with the structure of electrode shown in Table 1.

**[Table 1]**

| | |
|---|---|
| Working electrode | Platinum foil 1 cm² |
| Counter electrode | Platinum foil 4 cm² |
| Reference electrode | Ag/AgCl |

### (1) Measurement at constant current (galvanostat) mode

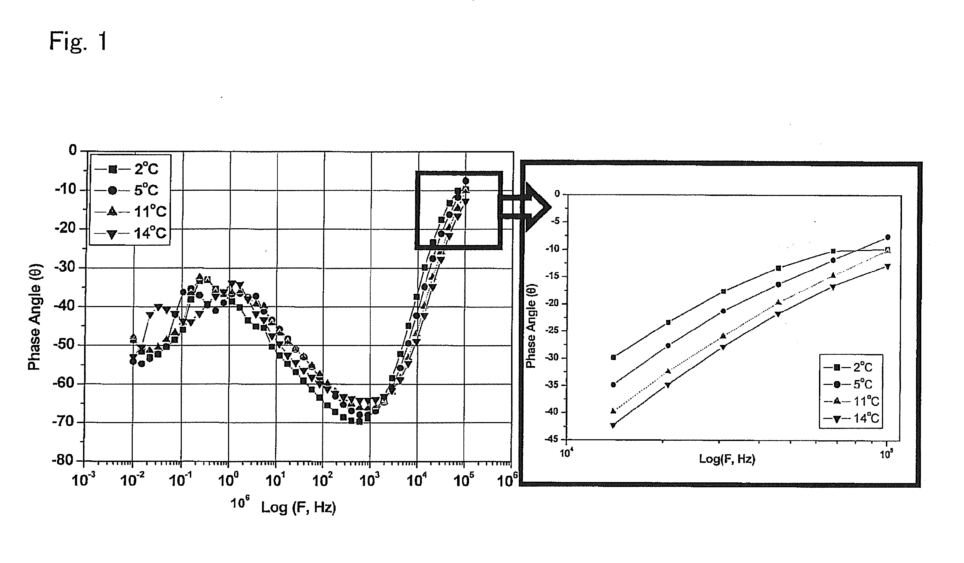

Fig. 1 shows results of measurements of the aqueous solution of 1-hexyl-3-methylimidazolium bromide (1.2 M) at a constant current (galvanostat) mode, at each temperature of 2°C, 5°C, 11°C and 14°C. The graph on the left in Fig. 1 is a graph showing phase angles at 1 mHz to 1 MHz. The graph on the right in Fig. 1 is an enlarged view of the graph on the left, which shows the phase angles at 10 kHz to 1 MHz. As shown in the graph on the right in Fig. 1, phase angles at 5°C, 11°C and 14°C monotonously increased with respect to frequencies at 10 kHz to 1 MHz. However, only the phase angle at 2°C showed different behavior from others around 1 MHz.

### (2) Detailed measurement at specific frequency

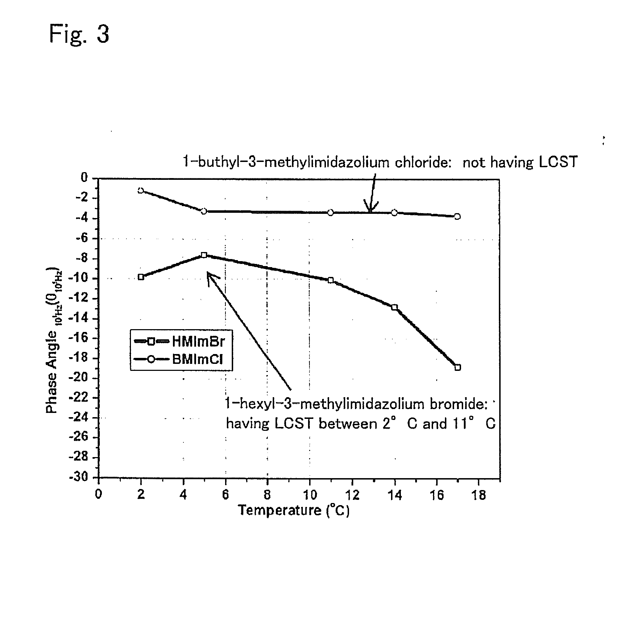

Since a change in behavior of phase angle was detected at 2°C around 1 MHz from (1), the frequency was fixated to 1 MHz and temperatures at which the behavior of the phase angle changed were evaluated in detail. Results are shown in Fig. 3 (noted as "HMImBR" in Fig. 3).

### 1.2. Comparative Example 1

A measurement of LCST behavior of an aqueous solution of 1-buthyl-3-methylimidazolium chloride (1.2 M) was carried out in the same manner as in Example 1.

### (1) Measurement at constant current (galvanostat) mode

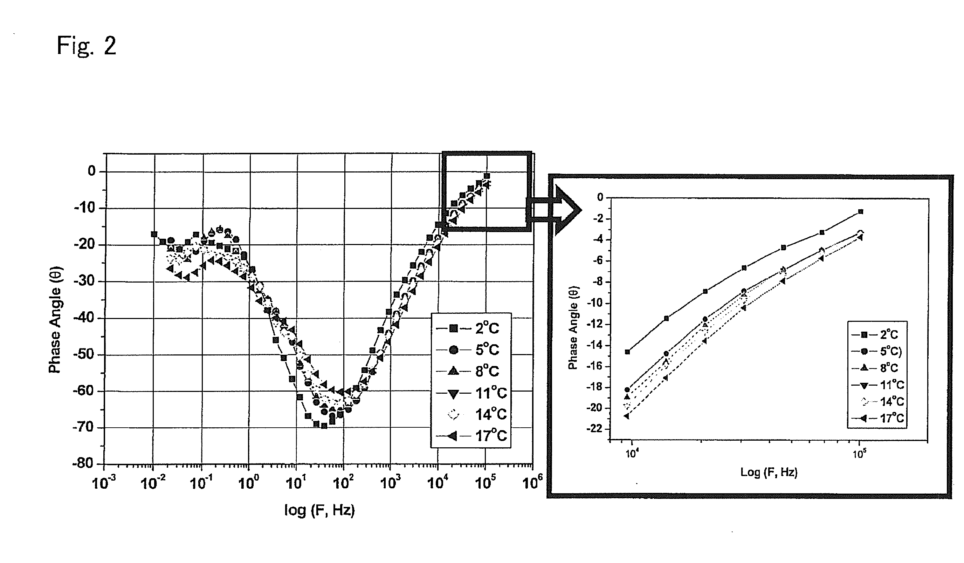

Fig. 2 shows results of measurements of the aqueous solution of 1-buthyl-3-methylimidazolium chloride (1.2 M) at a constant current (galvanostat, set current value: 500 mA) mode (1 mHz to 1 MHz), at each temperature of 2°C, 5°C, 11°C, 14°C and 17°C. The graph on the left in Fig. 2 is a graph showing phase angles at 1 mHz to 1 MHz. The graph on the right in Fig. 2 is an enlarged view of the graph on the left, which shows the phase angles at 10 kHz to 1 MHz. As shown in the graph on the right in Fig. 2, phase angles monotonously increased with respect to frequencies at 10 kHz to 1 MHz at every temperature. Therefore, it is considered that 1-buthyl-3-methylimidazolium chloride does not show LCST at least in a range of 2°C to 17°C.

### (2) Detailed measurement at specific frequency

In the method for measuring LCST behavior of the present invention, precise measurement at a specific frequency is not carried out in a case where the behavior of phase angles does not change in the measurement at a constant current (galvanostat) mode. However, in order to compare with Example 1, the behavior of the phase angles is precisely measured at the frequency fixated to 1 MHz. Results are shown in Fig. 3 (noted as "BMImCl" in Fig. 3).

### [Results]

From Fig. 3, it was found that 1-hexyl-3-methylimidazolium bromide has a LCST from 2°C to 11°C, since a large difference was detected in behavior of phase angles of 1-hexyl-3-methylimidazolium bromide (HMImBr) at 2°C, 5°C and 11°C. On the other hand, it was found that 1-buthyl-3-methylimidazolium chloride does not have a LCST at least in a range of 2°C to 17°C, since a large difference was not detected in behavior of phase angles of 1-buthyl-3-methylimidazolium chloride (BMImCl).

### 2. Evaluation of hygroscopic characteristic of water vapor adsorption-desorption material

### 2.1. Search of ionic liquid having LCST

### (1) Synthesis of ionic liquid

Search of ionic liquid having LCST was carried out by examining alkyl chain lengths of 1-aklyl-3-methylimidazolium salt which generally has low melting points and is generally easy to be an ionic liquid, and anion species. Synthesizing schemes of ionic liquids are shown below. The alkyl chains examined are three kinds of a hexyl group (-C₆H₁₃-n), octyl group (-C₈H₁₇-n) and dodecyl group (-C₁₂H₂₅-n). The anion species examined are three kinds of a bromide ion (Br⁻), acrylate ion (CH₂CHCOO⁻) and vinylphosphonate ion (CH₂CHPO₃⁻). By combining the alkyl chains and anion species, nine kinds of ionic liquids were synthesized.

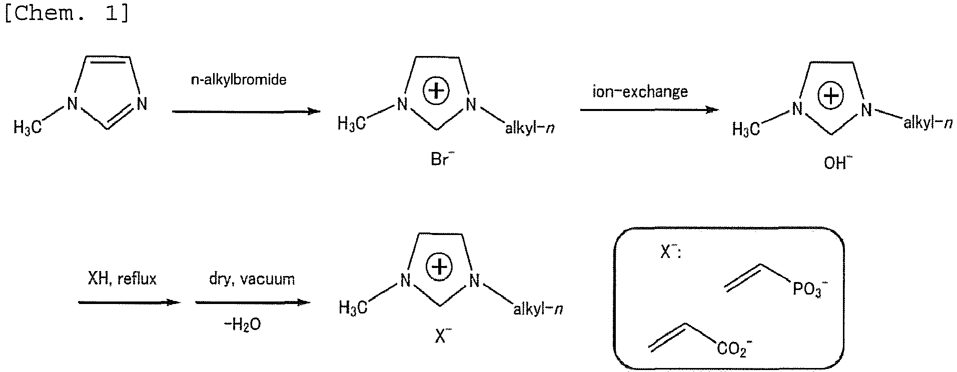

### (2) Measurement of LCST behavior

Measurements of LCST were carried out on the nine kinds of ionic liquids synthesized in (1), in the same manner as in Example 1. The measurement in a case where the alkyl chain is a hexyl group (-C₆H₁₃-n) and the anion species is a bromide ion (Br⁻) (1-hexyl-3-methylimidazolium bromide) corresponds to Example 1. Results are shown in Table 2. In Table 2, "LCST" means that the mixture of the ionic liquid and water exhibited LCST behavior, and "hydrophilic" means that the ionic liquid and water were always compatible to each other (hydrated) during the measurement.

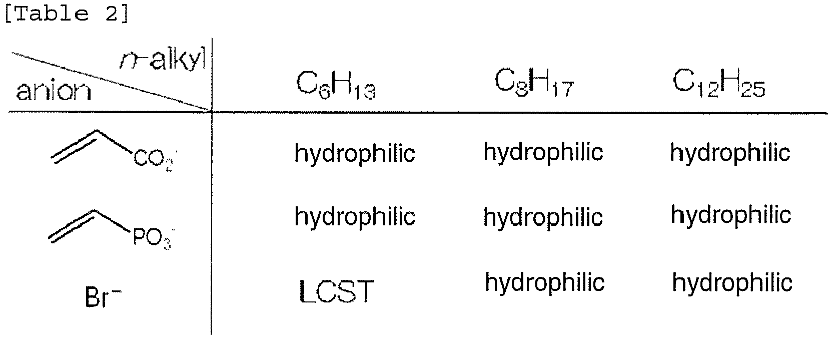

### (3) Evaluation

As shown in Table 2, only 1-hexyl-3-methylimidazolium bromide whose alkyl chain was a hexyl group (-C₆H₁₃-n) and anion species was a bromide ion (Br⁻) exhibited LCST behavior. Other ionic liquids did not exhibit LCST behavior. As shown in Example 1, 1-hexyl-3-methylimidazolium bromide had a LSCT between 2°C and 11°C.

### 2.2 Evaluation of hygroscopic characteristic of water vapor adsorption-desorption material

### 2.2.1. Example 2

### (1) Synthesis of water vapor adsorption-desorption material

As a mesoporous body, 0.2 g of commercially available aminopropyl silica gel (manufactured by GL Sciences Inc. , particle diameter 10 µm, average pore diameter 10 nm), and as an ionic liquid, 0.05 g of 1-hexyl-3-methylimidazolium bromide (HMImBr) were stirred in water for 24 hours, then kept still. After the supernatant was removed, the resulting material was dried in vacuum, whereby a water vapor adsorption-desorption material was synthesized.

### (2) Measurement of water vapor adsorption amount

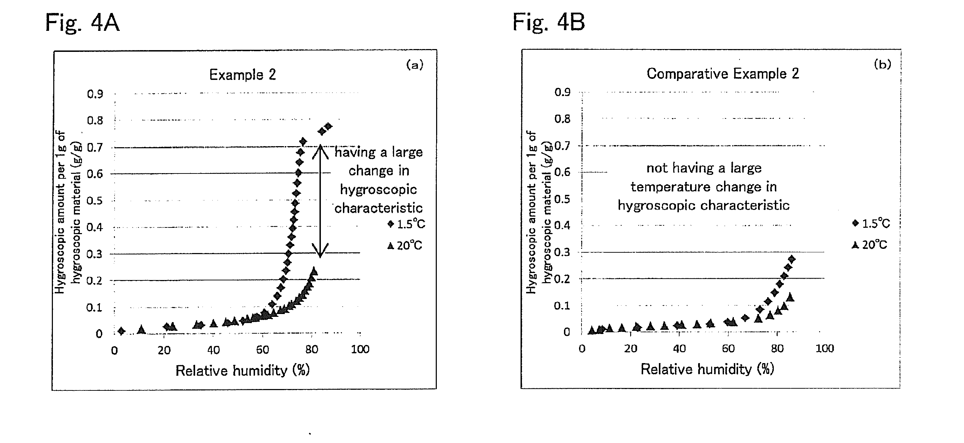

The water vapor adsorption-desorption material synthesized in (1) was dried at 60°C for 6 hours in vacuum. Thereafter, equilibrium values of its water vapor adsorption amount with respect to given relative moistures at 1.5°C and 20°C were measured by means of a gas adsorption evaluation instrument (BELSORP-MAX, manufactured by BEL Japan, Inc.). Measurement results of water vapor adsorption isotherms are shown in Fig. 4A.

### 2.2.1. Comparative Example 2

The water vapor adsorption amount of the aminopropyl silica gel used in Example 2 by which nothing is retained was measured in the same manner as in Example 2. Measurement results of water vapor adsorption isotherms are shown in Fig. 4B.

As shown in Fig. 4A, it was confirmed that Example 2 in which HMImBr was retained by the mesoporous body had a large difference in the hygroscopic characteristic between 1. 5°C and 20°C. On the other hand, as shown in Fig. 4B, the water vapor adsorption isotherm of Comparative Example 2 in which the measurement is carried out only on the mesoporous body (aminopropyl silica gel) did not have a large difference between 1.5°C and 20°C. Since HMImBr has a LSCT in a range of 2 to 11°C, it can be considered that this is because: at 1.5°C or below, HMImBr has a property of hydration then the hygroscopic characteristic increases with the inside of the pores showing hydrosphilicity, and at 20°C, HMImBr has a property of separation from water then the inside of the pores can be considered as being hydrophobized; the above difference shows up as the difference in water vapor hygroscopic characteristic.

## Claims

1. A water vapor adsorption-desorption material comprising:
a mesoporous body; and **characterized in that**
an ionic liquid is retained inside pores of the mesoporous body, the ionic liquid exhibiting LCST behavior.

2. The water vapor adsorption-desorption material according to claim 1, wherein the ionic liquid is 1-hexyl-3-methylimidazolium bromide.

3. A method for measuring LCST behavior of an ionic liquid used for a water vapor adsorption-desorption material, the method being **characterized in that** it comprises a step of detecting a change of hydration/dehydration state of a mixture of the ionic liquid and water as electric signals, by means of AC impedance measurement.

4. The method for measuring LCST behavior according to claim 3, wherein:
the AC impedance measurement is carried out at a constant current mode, at least in a range from 1 Hz to 1 MHz in every 3°C to 10°C, at least in a temperature range from -5°C to 100°C; and
in a case where a phase change which is not monotonic is found with respect to temperature change at a specific frequency, LCST is measured by measuring impedance or phase while the temperature of the mixture is finely changed at the specific frequency.

5. The method for measuring LCST behavior according to claim 4,
wherein
LCST is measured by measuring the phase while the temperature of the mixture is finely changed at the specific frequency.
